# EUROPEAN PATENT APPLICATION

(11) **EP 2 037 695 A1**
(43) Date of publication of application: **18.03.2009**
(21) Application number: 07767209.5
(22) Date of filing: 19.06.2007
(51) Int. Cl.: H04Q 7/36, H04B 7/26

(54) **RADIO RESOURCE ALLOCATION METHOD AND RADIO BASE STATION**

(30) Priority: 19.06.2006 JP 2006169457
(71) Applicant: NTT DoCoMo, Inc., Chiyoda-ku Tokyo 100-6150 (JP)
(72) Inventor: HARADA, Atsushi c/o IPROC NTT DoCoMo, Inc, Chyoda-ku Tokyo 100-6150 (JP); ISHII, Minami c/o IPROC NTT DoCoMo, Inc, Chyoda-ku Tokyo 100-6150 (JP); ABETA; Sadayuki c/o IPROC NTT DoCoMo, Inc, Chyoda-ku Tokyo 100-6150 (JP)
(74) Representative: HOFFMANN EITLE
(86) International application number: PCT/JP2007/062353
(87) International publication number: WO 2007/148706

(57) **Abstract**

A radio resource assigning method according to the present invention includes: a process of assigning persistently, at a radio base station (10), by a persistent scheduling, a radio resource to be used for transmitting downlink data to a mobile station; and a process B of changing, at the radio base station (10), by a dynamic scheduling, in a period when the persistent scheduling is applied, the radio resource to be assigned to the mobile station.

## Description

### TECHNICAL FIELD

The present invention broadly relates to a radio communication control technique, and, in particular, relates to a radio resource assigning method and a radio base station in a case where a persistent scheduling and a dynamic scheduling are used in combination.

### BACKGROUND ART

A conventional communication method such as an HSDPA (High Speed Downlink Packet Access) is configured so that, at each TTI (Transmission Time Interval) via an HS-SCCH (High speed-Shared Control Channel), a mobile station is notified of an assignment of a transmission opportunity to the downlink data addressed to the mobile station.

However, the data is transmitted, for example, once in every tens ms in a characteristic traffic, such as a voice traffic. Accordingly, when a configuration is employed in which the assignment of the transmission opportunity to the data is notified via a channel equivalent to the HS-SCCH, overhead of a signaling channel is made too large to achieve efficiency.

In this regard, in standardization of evolved UTRA, "persistent scheduling" is proposed, in which according to the characteristics of the application, the transmission opportunity is assigned to the data used for the application based on a predetermined period. In other words, the persistent scheduling is proposed, in which the data for the application is transmitted at a predetermined timing (for example, see Non-patent Documents 1, 2, and 3).

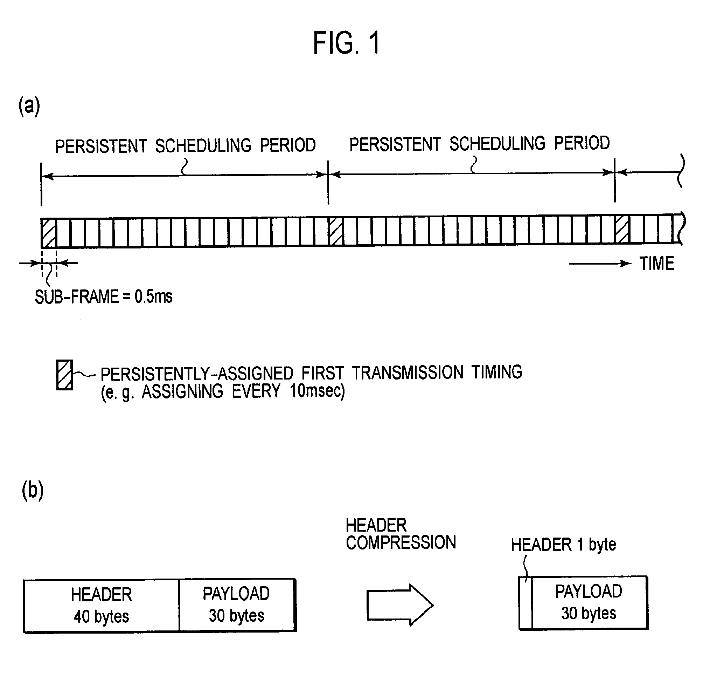

In such persistent scheduling, it is effective to perform a low-rate communication in which data arrives at certain intervals, and to apply to an application that requires a decrease of the overhead, such as a real time voice communication application, or the like. In this case, the persistent scheduling is configured so that a radio resource is assigned in cyclic periods based on the application type, as shown in Fig. 1(a).

For example, when considering the case of a VoIP packet, it can be expected that the radio resource assigned by the persistent scheduling is a minimum unit for a persistent transmission rate, since the radio resources are assigned in consideration of the packet size after the header compression.

For example, as shown in Fig. 1(b), the VolP packet before the header compression is configured of a header in 40 bytes and a payload. Here, the size of the payload is an integral multiple of a sample size for voice communications (for example, 10 bytes) and is 30 bytes in the example of Fig. 1(b).

The header in 40 bytes is a large overhead when compared with the sample size. Accordingly, a compression algorithm is applied to the header. The header can be compressed to the minimum of 1 byte in some types of the compression algorithm. The header after the compression includes only difference information, and the total packet size thereof is 31 bytes.

In this case, when a packet loss occurs in response to a handover or the like, it is required to restore the header to the original state (uncompressed state), to transmit the VolP packet in the uncompressed state, and to synchronize the state of the compression between the transmitting side and the receiving side.

However, when a VolP packet having a full size (for example, 70 bytes) is transmitted, the persistently-assigned radio resource may not be sufficient to transmit such VolP packet. In this case, an additional radio resource has to be assigned in order to transmit such VolP packet.

Furthermore, when control information is to be transmitted via a dedicated control channel (DCCH: Dedicated Control Channel) in a period when the persistent scheduling is performed, the persistently-assigned radio resource may not be sufficient. In this case, also, an additional radio resource has to be assigned.

In this manner, a lack of resource may occur when the radio resource that is persistently-assigned is the only radio resource to be used.

Considering from the foregoing description, it is desirable that a normal dynamic scheduling be used in combination with the persistent scheduling even in the period when the persistent scheduling is performed.

In this regard, however, it is assumed that the receiving side (mobile station) performs an intermittent reception (DRX: Discontinuous Reception) in a period when the persistent scheduling is performed, because a battery-saving effect can be expected during the persistent scheduling. For this reason, an effect of the intermittent reception cannot be expected when the persistent scheduling and the dynamic scheduling are simply used by a simple combination.
(Non-patent document 1)
   Ericsson, R1-060099, "Persistent Scheduling for E-UTRA," 3GPP TSG-RAN Wg1 LTE AdHoc, Helsinki, Finland, January 23-25, 2006
(Non-patent document 2)
   Qualcomm Europe, R1-060173, "Considerations for Control Signaling Support of Real Time Services," 3GPP TSG-RAN WG1 LTE AdHoc, Helsinki, Finland, January 23-25, 2006
(Non patent document 3)
   Qualcomm Europe, R1-060550, "Further Details on HS-SCCH-less Operation for VolP Traffic," 3GPP TSG-RAN WG2 Meeting #51, Denver, Colorado, USA, February 13-17, 2006

### DISCLOSURE OF THE INVENTION

The present invention has been made in view of the foregoing problems. An object of the present invention is to provide a radio resource assigning method and a radio base station that are able to obtain a battery-saving effect even when the persistent scheduling and the dynamic scheduling are used in combination for a mobile station in a period when the persistent scheduling is performed.

A first aspect of the invention is summarized as a radio resource assigning method, including: assigning persistently, at a radio base station, by a persistent scheduling, a radio resource to be used for transmitting downlink data to a mobile station; and changing, at the radio base station, by a dynamic scheduling, in a period when the persistent scheduling is applied, the radio resource to be assigned to the mobile station.

In the first aspect of the present invention, a sub frame for transmitting the downlink data to the mobile station may be persistently assigned as the radio resource by the persistent scheduling, and, in the changing, the radio base station may assign an additional radio resource to the mobile station, within a range of a predetermined number of sub frames existed before and after the sub frame that is persistently assigned by the persistent scheduling.

In the first aspect of the present invention, the persistent scheduling may be applied when transmitting, as the downlink data, data for an application that performs a low-rate communication at a constant speed.

In the first aspect of the present invention, in the changing, the radio base station may assign the additional radio resource to the mobile station in a shared data channel.

A second aspect of the present invention is summarized as a radio base station, including: a persistent scheduling unit configured to persistently assign a radio resource to be used for transmitting downlink data to a mobile station; and a dynamic scheduling unit configured to change the radio resource to be assigned to the mobile station, in a period when the downlink data is transmitted to the mobile station by using the radio resource which is persistently assigned.

In the second aspect of the present invention, the persistent scheduling unit may be configured to persistently assign, as the radio resource, to the mobile station, a sub frame for transmitting the downlink data, and the dynamic scheduling unit may be configured to assign an additional radio resource to the mobile station, within a range of the predetermined number of sub frames existed before and after the sub frame that is persistently assigned by the persistent scheduling unit.

In the second aspect of the present invention, the persistent scheduling unit may be configured to persistently assign the radio resource when transmitting, as the downlink data, data for an application that performs a low-rate communication at a constant speed.

In the second aspect of the present invention, the dynamic scheduling unit may be configured to assign the additional radio resource to the mobile station in a shared data channel.

### BRIEF DESCRIPTION OF THE DRAWINGS

[Fig. 1] Fig. 1 is a view for illustrating a persistent scheduling and a header compression.
[Fig. 2] Fig. 2 is a view showing an example of a radio resource assigning method when persistent scheduling and dynamic scheduling are used in combination.
[Fig. 3] Fig. 3 is a schematic block diagram of a radio base station according to one embodiment of the present invention.
[Fig. 4] Fig. 4 is a view showing an example of a persistent scheduling pattern stored in a scheduler of the radio base station.

### BEST MODE FOR CARRYING OUT THE INVENTION

A preferred embodiment of the present invention will be described by referring to the accompanying drawings.

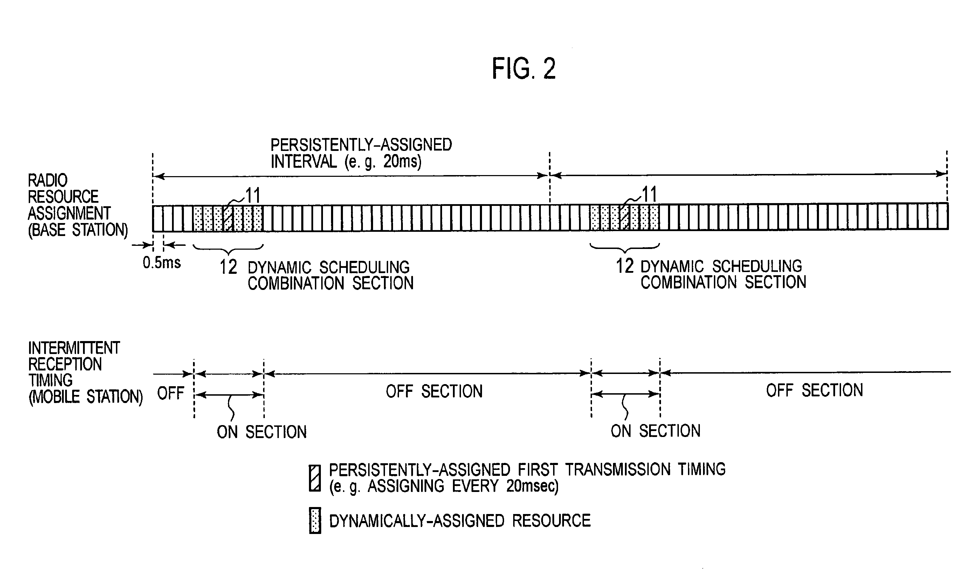

Fig. 2 is a view for illustrating a radio resource assigning method according to one embodiment of the present invention.

In an example of Fig. 2, a period during which the persistent scheduling is performed (persistent scheduling period) is set to be "20 ms." In other words, a voice traffic, such as a VoIP packet, exists in every 20 ms.

One radio section of the persistent scheduling (persistent scheduling period) is configured of a plurality of sub frames. In the example of Fig. 2, a size of the sub frame is "0.5 ms," and the one radio section of persistent scheduling (persistent scheduling period) is configured of 40 sub frames.

A sub frame 11 shown by diagonal lines indicates a radio resource to be used for the first transmission. Here, the radio resource is persistently assigned by the persistent scheduling.

Sub frames to which a radio resource can be assigned by the dynamic scheduling (dynamic scheduling combination section 12) are seven frames including the sub frame 11 that is persistently assigned by the persistent scheduling, and previous three sub frames and following three sub frames of the sub frame 11.

The dynamic scheduling combination section 12 is not limited to the range including the previous and following 3 sub frames of the radio resource (sub frame) that is persistently assigned by the persistent scheduling. For example, it is properly selectable depending on a design, such as the range including the previous and following 2 sub frames or the range including the previous and following 4 sub frames.

The dynamic scheduling combination section 12 may be determined in advance when a system is designed, or may be determined by a signaling from an upper layer.

Here, when the radio base station transmits a VolP packet by using a radio resource (radio resource for the first transmission) persistently assigned to a mobile station by the persistent scheduling, and when a VoIP packet having a data amount that cannot be transmitted by the radio resource persistently assigned for the first transmission arrives, or when the downlink control information is required to be transmitted to the mobile station via the control channel such as a DCCH, the radio base station is configured to select, as a radio resource to be assigned to the mobile station, a radio resource having a favorable radio state, within the range of the dynamic scheduling combination section 12, and to transmit the radio resource to the mobile station.

The mobile station is in a normal reception state (ON state) during the dynamic scheduling combination section 12 that is corresponding to the transmission timings assigned by the persistent scheduling. Accordingly, the mobile station can properly receive the downlink control information or downlink data that is transmitted via a shared control channel (for example, L1/L2 control channel) or a shared data channel.

In other words, the mobile station can receive the downlink control information or downlink data, which is transmitted via the shared control channel (for example, L1/L2 control channel) or the shared data channel at dynamic transmission timings close to the timings of the intermittent reception of the voice packet.

The mobile station can be in an OFF state during a section other than the dynamic scheduling combination section 12 in order to achieve a power-saving of the battery. Thereby, a dynamic assignment of the radio resource and the power-saving of the battery can be achieved at the same time.

Note that, when the mobile station fails to receive the downlink data transmitted via the shared data channel during the dynamic scheduling combination section 12, the mobile station transmits a retransmission request for the downlink data to the radio base station.

When the mobile station transmits the retransmission request, the mobile station automatically shifts to a normal reception state (ON state) after a predetermined time has elapsed, for example, after a round-trip time between the mobile station and the radio base station has elapsed. Then, the mobile station prepares for receiving the downlink data retransmitted via a retransmission channel.

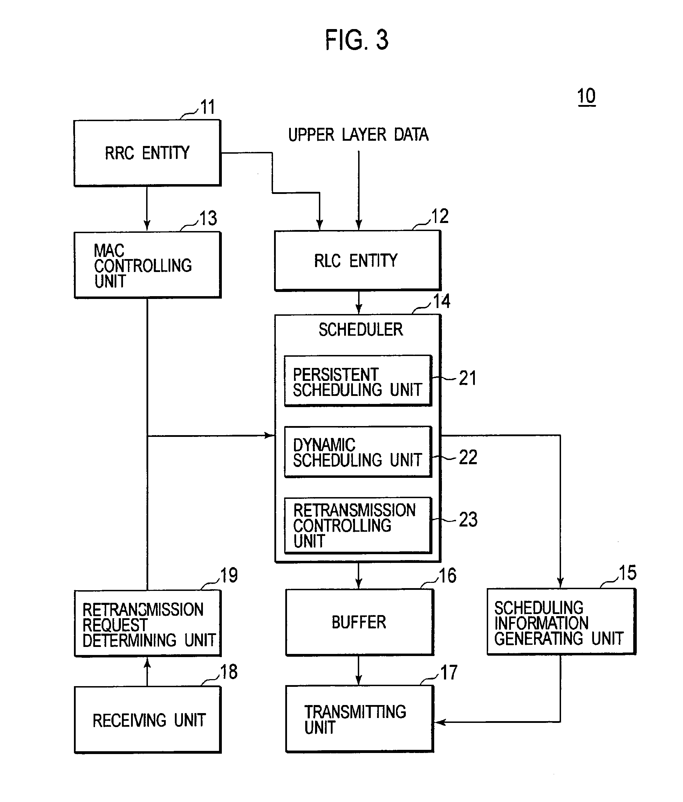

Fig. 3 is a schematic block diagram of the radio base station that performs the radio resource assignment control as shown in Fig. 2. The radio base station 10 includes an RRC (Radio Resource Control) entity 11, an RLC (Radio Link Control) entity 12, a MAC controlling unit 13, a scheduler 14, a scheduling information generating unit 15, a buffer 16, a transmitting unit 17, a receiving unit 18, and a retransmission request determining unit 19.

The upper layer data is inputted to the RLC entity 12. The upper layer data may be U-Plane data (for example, VoIP packet) or may be C-plane data (for example, RRC message that specifies the dynamic scheduling combination section 12).

The RLC entity 12 is configured to divide the inputted upper layer data so as to input the divided data to the scheduler 14.

From the inputted upper layer data, the scheduler 14 is configured to generate downlink control information to be transmitted via the shared control channel, such as the L1/L2 control channel, and downlink data to be transmitted via the shared data channel. Then, the scheduler 14 buffers the generated data in the buffer 16.

A dynamic scheduling unit 22 included in the scheduler 14 is configured to change the radio resource to be assigned to the mobile station, in a period when downlink data is transmitted to the mobile station by using the radio resource persistently assigned by the persistent scheduling unit 21.

Specifically, the dynamic scheduling unit 22 is configured to assign an additional radio resource to the mobile station, within the range of the predetermined number of sub frames (transmission timing) existed before and after the sub frame that is persistently assigned by the persistent scheduling unit 21 (dynamic scheduling combination section 12).

For example, within the range of the dynamic scheduling combination section 12, the dynamic scheduling unit 22 can dynamically assign a transmission opportunity to the downlink data to be transmitted via the shared data channel. In addition, within the range of the dynamic scheduling combination section 12, the dynamic scheduling unit 22 can dynamically assign a transmission opportunity to the downlink control information to be transmitted via the shared control channel.

In addition, for example, the dynamic scheduling unit 22 may be configured to change the radio resource to be assigned to the mobile station, by assigning an additional radio resource to the mobile station, in the sub frame (within the range of the dynamic scheduling combination section 12) persistently assigned by the persistent scheduling unit 21.

Meanwhile, the persistent scheduling unit 21 included in the scheduler 14 is configured to persistently assign a radio resource (sub frame (transmission timing) and frequency resource block) to be used for transmitting the downlink data to the mobile station.

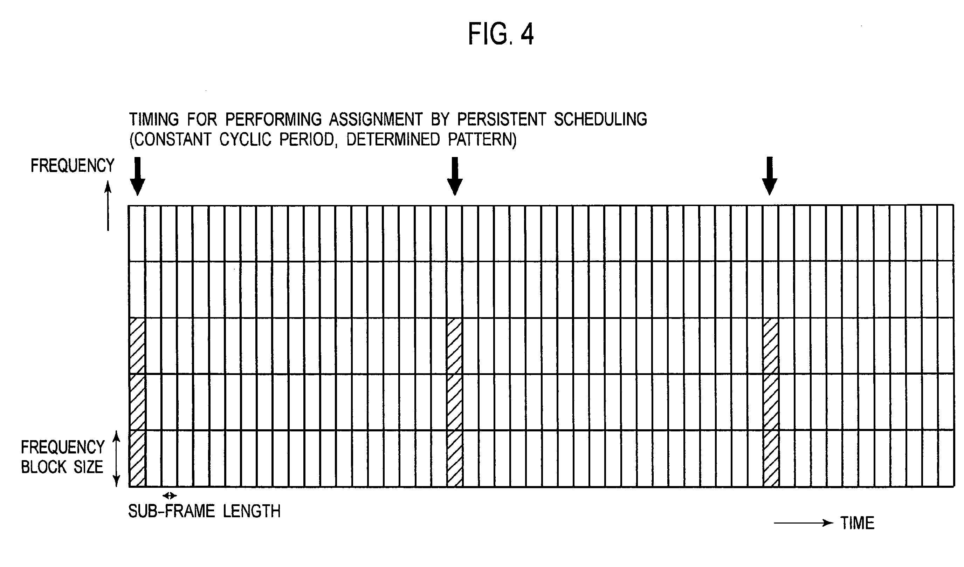

For example, the persistent scheduling unit 21 stores a timing pattern of the persistent scheduling as shown in Fig. 4, and is configured to control transmission timings of the data for a certain type of the application, (such as VolP).

In an example of Fig. 4, the persistent scheduling unit 21 is configured to assign a frequency resource block by a predetermined pattern to each mobile station in constant cyclic periods.

In addition, when a propagation environment between the persistent scheduling unit 21 and the mobile station is unfavorable, the persistent scheduling unit 21 may be configured to change the frequency resource block to be used for transmitting the downlink data, in accordance with the predetermined pattern.

For example, the persistent scheduling unit 21 is configured to persistently assign the radio resource, when data (for example, VoIP packet) for an application performing a low-rate communication at a constant speed is transmitted as downlink data.

The scheduling information generating unit 15 is configured to generate dynamic scheduling information in accordance with the determination by the dynamic scheduling unit 22. The scheduling information generating unit 15 is also configured to generate persistent scheduling information in accordance with the determination by the persistent scheduling unit 21.

In addition, when the dynamic scheduling unit 22 assigns an additional radio resource to the mobile station in the sub frame (within the range of the dynamic scheduling combination section 12) that is persistently assigned by the persistent scheduling unit 21, the scheduling information generating unit 15 may be configured to change contents of the persistent scheduling information instead of generating the dynamic scheduling information.

In such a case, the scheduling information generating unit 15 may be configured to change the contents of the persistent scheduling information to the original contents after a predetermined period of time (for example, one persistent scheduling period) has elapsed.

The transmitting unit 17 is configured to transmit the downlink data buffered in the buffer 16, by using the radio resource (sub frame and frequency resource block) assigned to the mobile station, according to the scheduling information generated by the scheduling information generating unit 15.

The transmitting unit 17 is also configured to transmit the downlink data buffered in the buffer 16, by using the radio resource (sub frame and frequency resource block) persistently assigned to the mobile station, according to the persistent scheduling information generated by the scheduling information generating unit 15.

A reception acknowledged response (ACK/NACK) to the downlink data transmitted from the mobile station is received by the receiving unit 18 and is inputted to the retransmission request determining unit 19.

The retransmission request determining unit 19 is configured to determine, based on the inputted reception acknowledged response, whether or not the downlink data is to be retransmitted, and input the determination result to the scheduler 14.

The retransmission controlling unit 23 included in the scheduler 14 is configured to perform a scheduling for retransmitting the downlink data, in accordance with the determination result for the inputted retransmission request.

Note that, it is desirable that the downlink data (such as VolP packet) transmitted by the persistent scheduling be retransmitted according to a method (synchronous retransmission control) of assigning a predetermined sub frame for every constant period (for example, round-trip time) after the first transmission.

The radio resource to be additionally assigned to the mobile station may be retransmitted according to a method (asynchronous retransmission control) of assigning the radio resource to any sub frame in which a constant period (for example, round-trip time) has elapsed after the first transmission via a channel (L1/L2 control channel) for achieving the dynamic scheduling. However, from the viewpoint of maintaining the intermittent reception effect of the mobile station, it is desirable that the radio resource to be additionally assigned to the mobile station be also retransmitted according to the synchronous retransmission control.

As described above, according to the present embodiment, the traffic having a constant speed and a low-rate, such as voice communications or video telephone (VoIP), performs the packet transmission based on the persistent scheduling that assigns the radio resource at the constant cyclic period.

When the downlink data that cannot be completely transmitted with the radio resource persistently assigned for the first transmission is generated, a radio resource is dynamically assigned (performs dynamic scheduling), to the additional downlink resource or to the control information to be transmitted via the individual control channel, within the predetermined combination range existed before and after the transmission timing that is persistently assigned by the persistent scheduling.

Thereby, the mobile station can properly receive the L1/L2 control channel and maintain the effect of the intermittent reception by being in a normal reception state (ON state) only for a predetermined period at a predetermined timing.

In other words, according to the configuration of the present embodiment, the mobile station being in a service by use of the persistent scheduling does not need to be in a normal reception state (ON state) at all times in order to receive the control information via the L1/L2 control channel (shared control channel). Accordingly, the battery-saving effect by the intermittent reception can be expected.

Note that, the entire content of Japanese Patent Application No. 2006-169437 (filed on June 19, 2006) is incorporated herein by reference.

Also, the entire content of "Ericsson, R1-060099, "Persistent Scheduling for E-UTRA," 3GPP TSG-RAN Wg1 LTE AdHoc, Helsinki, Finland, January 23-25, 2006" is incorporated herein by reference.

Furthermore, the entire content of "Qualcomm Europe, R1-060173, "Considerations for Control Signalling Support of Real Time Services," 3GPP TSG-RAN WG1 LTE AdHoc, Helsinki, Finland, January 23-25, 2006" is incorporated herein by reference.

Still further, the entire content of "Qualcomm Europe, R1-060550, "Further Details on HS-SCCH-less Operation for VoIP Traffic," 3GPP TSG-RAN WG2 meeting #51, Denver, Colorado, USA, February 13-17, 2006" is incorporated herein by reference.

As described above, the present invention has been described in detail by using the above-described embodiment. However, it is clear for a person skilled in the art that the present invention is not limited to the embodiment described herein. The present invention can be implemented as a modified or corrected embodiment without departing from the purpose and scope of the invention which is defined by the description of the scope of claims. Accordingly, the description of the present specification is intended to provide illustrative description and does not have any meaning of limiting the present invention.

### INDUSTRIAL APPLICABILITY

As described above, the embodiment of the present invention can provide a radio resource assigning method and a radio base station that are able to obtain a battery-saving effect even when the persistent scheduling and the dynamic scheduling are used in combination for a mobile station in a period when the persistent scheduling is performed.

## Claims

1. A radio resource assigning method, comprising:
assigning persistently, at a radio base station, by a persistent scheduling, a radio resource to be used for transmitting downlink data to a mobile station; and
changing, at the radio base station, by a dynamic scheduling, in a period when the persistent scheduling is applied, the radio resource to be assigned to the mobile station.

2. The radio resource assigning method according to claim 1, wherein
a sub frame for transmitting the downlink data to the mobile station is persistently assigned as the radio resource by the persistent scheduling, and
in the changing, the radio base station assigns an additional radio resource to the mobile station, within a range of a predetermined number of sub frames existed before and after the sub frame that is persistently assigned by the persistent scheduling.

3. The radio resource assigning method according to claim 1, wherein the persistent scheduling is applied when transmitting, as the downlink data, data for an application that performs a low-rate communication at a constant speed.

4. The radio resource assigning method according to claim 2, wherein in the changing, the radio base station assigns the additional radio resource to the mobile station in a shared data channel.

5. A radio base station, comprising:
a persistent scheduling unit configured to persistently assign a radio resource to be used for transmitting downlink data to a mobile station; and
a dynamic scheduling unit configured to change the radio resource to be assigned to the mobile station, in a period when the downlink data is transmitted to the mobile station by using the radio resource which is persistently assigned.

6. The radio base station according to claim 5, wherein the persistent scheduling unit is configured to persistently assign, as the radio resource, to the mobile station, a sub frame for transmitting the downlink data, and
the dynamic scheduling unit is configured to assign an additional radio resource to the mobile station, within a range of the predetermined number of sub frames existed before and after the sub frame that is persistently assigned by the persistent scheduling unit.

7. The radio base station according to claim 4, wherein the persistent scheduling unit is configured to persistently assign the radio resource when transmitting, as the downlink data, data for an application that performs a low-rate communication at a constant speed.

8. The radio base station according to claim 6, wherein the dynamic scheduling unit is configured to assign the additional radio resource to the mobile station in a shared data channel.
